# EUROPEAN PATENT APPLICATION

(11) **EP 4 763 404 A1**
(43) Date of publication of application: **24.06.2026**
(21) Application number: 25768635.2
(22) Date of filing: 06.03.2025
(51) Int. Cl.: B23K 26/359, B23K 26/21, H01M 50/516, H01M 50/553, H01M 50/559

(54) **WELDING METHOD, WELDED PRODUCT, AND BATTERY MODULE**

(30) Priority: 08.03.2024 KR 20240033203; 05.03.2025 KR 20250028016
(71) Applicant: LG Energy Solution, Ltd., Seoul 07335 (KR)
(72) Inventor: LEE, Yong Ki, Daejeon 34122 (KR); CHO, Kyung Wook, Daejeon 34122 (KR); LEE, Chang Je, Daejeon 34122 (KR); LEE, So Hee, Daejeon 34122 (KR); MYOUNG, Gi Hoon, Daejeon 34122 (KR); SHIN, Seung Min, Daejeon 34122 (KR)
(74) Representative: Goddar, Heinz J.
(86) International application number: PCT/KR2025/002955
(87) International publication number: WO 2025/188079

(57) **Abstract**

The present disclosure relates to a welding method, a welded product, and a battery module, and the welding method according to the present disclosure includes a positioning process in which multiple base materials are positioned in overlapping with each other; and a welding process in which the multiple base materials are welded together to form a predetermined welding pattern, wherein the welding process welds the welding pattern in a form in which a plurality of spiral patterns are connected without overlapping.

## Description

### TECHNICAL FIELD

### CROSS-REFERENCE TO RELATED APPLICATIONS

The present application is based on and claims priority from Korean Patent Application No. 10-2024-0033203, filed on March 8, 2024 and Korean Patent Application No. 10-2025-0028016, filed on March 5, 2025, with the Korean Intellectual Property Office, the disclosure of which is incorporated herein in its entirety by reference.

### TECHNICAL FIELD

The present disclosure relates to a welding method, a welded product, and a battery module.

### BACKGROUND ART

Application of multiple conventional spiral pattern welding portions causes problems such as the generation of a large amount of spatter at the start/end section and a notch effect due to the bead shape at the end point of the spiral pattern. Additionally, it may cause a problem of reducing the possibility of inspection when interlocked with real-time welding quality inspection.

And, the continuous fusion of the welding jig due to the generation of a large amount of spatter acts unfavorably in terms of maintenance/repair.

The notch effect at the end of the spiral pattern acts as a factor capable of degrading the mechanical properties under repeated loads.

If the welding diameter is small or the welding time is shortened due to a high welding speed, there is a problem of reducing the possibility of real-time welding quality inspection.

### SUMMARY

### TECHNICAL PROBLEM

One aspect of the present disclosure is to provide a welding method, a welded product, and a battery module that may reduce spatter and improve mechanical properties.

### TECHNICAL SOLUTION

A welding method according to an embodiment of the present disclosure includes a positioning process in which multiple base materials are positioned in overlapping with each other; and a welding process in which the multiple base materials are welded together to form a predetermined welding pattern, wherein the welding process welds the welding pattern in a form in which a plurality of spiral patterns are connected without overlapping.

Additionally, a welded product according to an embodiment of the present disclosure includes multiple base materials positioned in overlapping with each other; and a predetermined welding pattern formed by welding the multiple base materials together, wherein the welding pattern forms a plurality of spiral patterns, and the plurality of spiral patterns do not overlap and are connected.

In addition, a battery module according to an embodiment of the present disclosure includes the welded product according to an embodiment of the present disclosure.

### ADVANTAGEOUS EFFECTS

According to the present disclosure, when a welding pattern is formed in a form in which a plurality of spiral patterns are connected by welding multiple base materials together, spatter may be reduced, mechanical properties may be improved, space utilization may be increased, and the possibility of real-time welding quality inspection may be increased by welding continuously without overlapping the welding line.

Additionally, according to the present disclosure, the welding line of the plurality of spiral patterns may be welded so as to be continuously connected without overlapping, thereby preventing deterioration of mechanical and material properties of the welded part due to high heat generated when the welding line overlaps. Additionally, it is possible to significantly reduce the notch effect that occurs when the plurality of spiral patterns are each formed into one pattern.

In addition, according to the present disclosure, the plurality of spiral patterns include a first spiral pattern and a second spiral pattern, and the welding starts at the center of the first spiral pattern and ends at the center of the second spiral pattern, so that the two spiral patterns may be formed into one non-overlapping continuous pattern, thereby securing mechanical properties capable of withstanding similar loads even if the diameter of the welding portion (welding pattern) is reduced.

### BRIEF DESCRIPTION OF THE DRAWINGS

FIG. 1 is a plan view showing a welding process in a welding method according to an embodiment of the present disclosure.
FIG. 2 is a reference view showing a welding pattern formed through a welding process of a welding method according to an embodiment of the present disclosure.
FIG. 3 is a perspective view showing an example of a welded product welded by a welding method according to an embodiment of the present disclosure.
FIG. 4 is a plan view exemplarily showing a welded part of an example of a welded product welded by a welding method according to an embodiment of the present disclosure.
FIG. 5 is an enlarged plan view showing a welded part of another example of a welded product welded by a welding method according to an embodiment of the present disclosure.
FIG. 6 is a cross-sectional view showing a secondary battery applied to another example of a welded product welded by a welding method according to an embodiment of the present disclosure.
FIG. 7 is a perspective view showing another example of a welded product welded by a welding method according to an embodiment of the present disclosure.
FIG. 8 is an external photograph showing a fractured state of a welded product welded by a welding method according to a comparative example.
FIG. 9 is an external photograph showing a fractured state of a welded product welded by a welding method according to a manufacturing example.
FIG. 10 is a graph showing a tensile load of a welded product welded by a welding method according to a comparative example.
FIG. 11 is a graph showing a tensile load of a welded product welded by a welding method according to a manufacturing example.

### DETAILED DESCRIPTION

The objectives, specific advantages, and novel features of the present disclosure will become more apparent from the following detailed description and preferred embodiments in connection with the accompanying drawings. It should be noted that in affixing the reference numerals to the elements in each drawing in this specification, the identical reference numerals are affixed to the identical elements as much as possible even if they are shown in different drawings. Additionally, the present disclosure may be embodied in many different forms and is not limited to the embodiments described herein. And, in describing the present disclosure, detailed descriptions of related known technologies that may unnecessarily obscure the gist of the present disclosure will be omitted.

### Welding method according to an embodiment

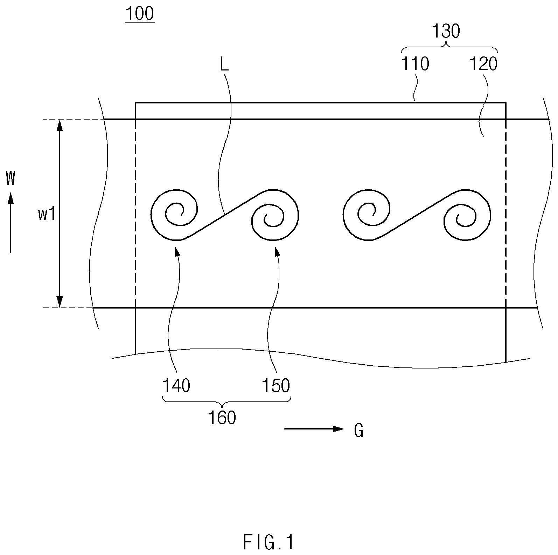

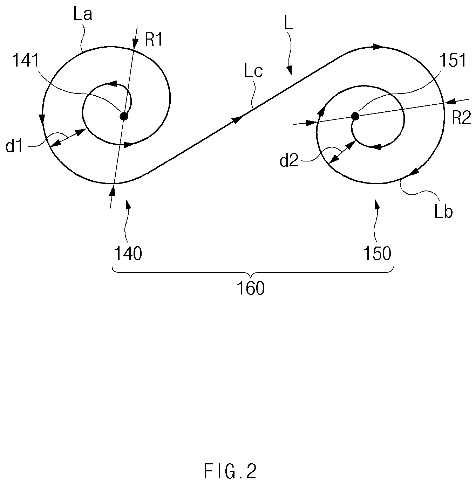

FIG. 1 is a plan view showing a welding process in a welding method according to an embodiment of the present disclosure, and FIG. 2 is a reference view showing a welding pattern formed through a welding process of a welding method according to an embodiment of the present disclosure.

Referring to FIGS. 1 and 2, the welding method according to the embodiment of the present disclosure may manufacture a welded product 100 by including a positioning process of positioning multiple base materials 130 to be in overlapping with each other and a welding process of welding the multiple base materials 130 together to form a predetermined welding pattern 160.

More specifically, the positioning process may position the multiple base materials 130 to be in overlapping with each other.

Additionally, the positioning process may position the multiple base materials 130 so that the width w1 of the overlapping part of the multiple base materials 130 is 8 to 15 mm. Here, the multiple base materials 130 may include a first base material 110 and a second base material 120, and the width w1 of the overlapping section of the first base material 110 and the second base material 120 may be, for example, 8 to 15 mm. Here, the width w1 of the overlapping part of the multiple base materials 130 may be, for example, a width w1 in a direction parallel to the width direction W of the welding pattern 160 perpendicular to the length (extension) direction G of the welding pattern 160.

In the welding process, the multiple base materials 130 are welded into a plurality of spiral patterns. At this time, the welding process welds the welding pattern 160 in a form in which the plurality of spiral patterns are connected without overlapping.

In addition, the welding process may be performed with a plurality of spiral patterns 140, 150 in which two or more spiral patterns are connected.

And, the welding process may be performed so that the welding line L does not overlap and is continuously connected when welding with the plurality of spiral patterns 140, 150.

The plurality of spiral patterns 140, 150 may include a first spiral pattern 140 and a second spiral pattern 150.

Here, the welding process may start welding at the center 141 of the first spiral pattern 140 and end welding at the center 151 of the second spiral pattern 150.

The welding process may be performed by irradiating a laser to the base material 130 using a laser device. Here, the welding process may be performed by irradiating laser light having a wavelength of 1030 nm to 1070 nm to the base material 130, for example, using a laser device. Accordingly, by irradiating laser light having a wavelength of 1030 nm to 1070 nm to weld, it is possible to secure welding quality capable of withstanding a high separation load that separates multiple welded base materials 130.

In the welding process, the first spiral pattern 140 may be formed by irradiating laser light in a counterclockwise direction, and the second spiral pattern 150 may be formed by irradiating laser light in a clockwise direction. That is, in the welding process, the welding pattern 160 may form the first spiral pattern 140 directed from the inside to the outside, and then connect the welding line L to form the second spiral pattern 150 directed from the outside to the inside.

The welding line L may include a first welding line La of the first spiral pattern 140, a second welding line Lb of the second spiral pattern 150, and a third welding line Lc connecting the first spiral pattern 140 and the second spiral pattern 150. Here, the first welding line La and the second welding line Lb may be formed in a curved line to form a spiral pattern, and the second welding line Lb may be formed in a straight line to be connected to the first welding line La and the second welding line Lb.

Meanwhile, the welding process may be performed such that the diameters R1, R2 of the plurality of spiral patterns 140, 150 are each formed to be 1.5 to 3.0 π. That is, the welding process may be performed such that the diameters R1, R2 of the first spiral pattern 140 and the second spiral pattern 150 are each 1.5 to 3.0 π. Accordingly, the first spiral pattern 140 and the second spiral pattern 150 are welded to have the diameters R1, R2 at a level of 1.5 to 3.0 π, respectively, so that there is an effect of acting as an effective welding pattern 160 from mechanical and material points of view within a narrow area. At this time, the diameters R1, R2 of the first spiral pattern 140 and the second spiral pattern 150 are formed to be equal to or greater than 1.5 π, which is the lower limit, so that there is an effect of preventing excessive heat input due to the overlapping of the heat input of the welding line L in a direction from the outside to the inside (out → in) of the spiral patterns 140, 150.

Meanwhile, the welding process may be performed such that the intervals d1, d2 between the welding lines L in the plurality of spiral patterns 140, 150 are 0.2 to 0.4 mm. That is, the welding process may be performed such that the intervals d1, d2 between the welding lines L in the first spiral pattern 140 and the second spiral pattern 150 are 0.2 to 0.4 mm. Accordingly, the intervals d1, d2 between the welding lines L in the first spiral pattern 140 and the second spiral pattern 150 are formed to be equal to or greater than 0.2 mm, which is the lower limit, and thus there is an effect of preventing the occurrence of a decrease in the strength of a welding portion due to excessive heat input when the intervals d1, d2 between the welding lines L are too narrow. Additionally, the intervals d1, d2 between the welding lines L in the first spiral pattern 140 and the second spiral pattern 150 are formed to be equal to or less than 0.4 mm, which is the upper limit, and thus there is an effect of preventing the formation of a welding portion with weak strength when the intervals d1, d2 between the welding lines L are too wide.

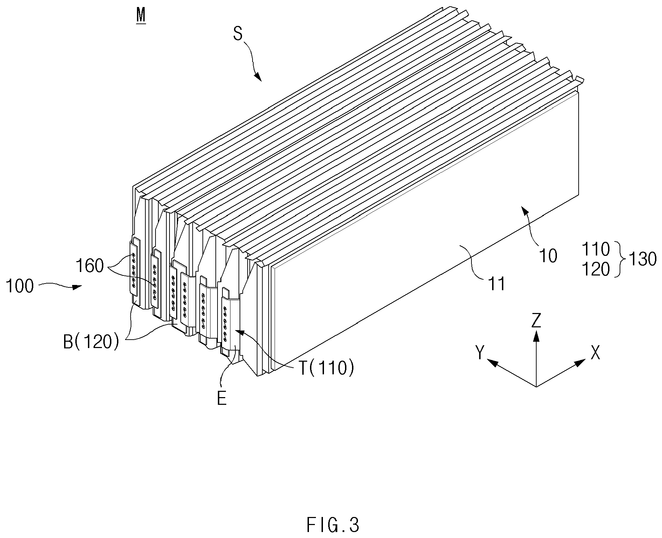

FIG. 3 is a perspective view showing an example of a welded product welded by a welding method according to an embodiment of the present disclosure.

Meanwhile, referring to FIG. 3, the multiple base materials 130 may be electrode leads E and busbars B in a battery module including a cell stack in which multiple secondary batteries 10 having the electrode leads E are stacked, and the busbars B connecting the electrode leads E of the multiple secondary batteries 10.

In the welding method according to the embodiment of the present disclosure, configured as described above, when a welding pattern 160 is formed in a form in which the plurality of spiral patterns 140, 150 are connected by welding multiple base materials together, spatter may be reduced, mechanical properties may be improved, space utilization may be increased, and the possibility of real-time welding quality inspection may be increased by welding continuously without overlapping the welding line L. That is, when one spiral pattern is formed, a large amount of spatter is generated at the welding start point and a large amount of cracks are generated at the welding end point, but the welding method according to the embodiment of the present disclosure may form the welding pattern 160 in a form in which the plurality of spiral patterns are connected, thereby significantly reducing the spatter generated at the welding start point and the cracks generated at the welding end point.

Additionally, in the welding method according to the embodiment of the present disclosure, the welding line L of the plurality of spiral patterns 140, 150 may be welded so as to be continuously connected without overlapping, thereby preventing defects from occurring in the welded part due to high heat and overheating generated when the welding line L overlaps. Additionally, it is possible to significantly reduce the notch effect that occurs when the plurality of spiral patterns 140, 150 are each formed into one pattern. In addition, it is possible to prevent the occurrence of the notch effect at the corners when welding in a rectangular pattern. That is, the notch effect may be removed to improve the mechanical properties under repeated load.

In addition, in the welding method according to the embodiment of the present disclosure, the plurality of spiral patterns 140, 150 include the first spiral pattern 140 and the second spiral pattern 150, and the welding starts at the center 141 of the first spiral pattern 140 and ends at the center 151 of the second spiral pattern 150, so that the two spiral patterns 140, 150 may be formed into one non-overlapping continuous pattern, thereby securing mechanical properties capable of withstanding a similar load even if the diameter of the welding portion (welding pattern) is reduced. Accordingly, the space utilization may be increased, and the possibility of real-time welding quality inspection may be increased. That is, when the two spiral patterns 140, 150 are formed into one non-overlapping continuous pattern, the welding length is increased compared to when two spiral patterns are formed separately, and thus mechanical properties capable of withstanding a similar load may be secured even if the diameter is reduced. (41.1% increase in welding length)

### Welded product according to an embodiment

Hereinafter, a welded product according to an embodiment of the present disclosure will be described.

Referring to FIG. 1, a welded product 100 according to an embodiment of the present disclosure includes multiple base materials 130 positioned in overlapping with each other and a predetermined welding pattern 160 formed by welding the multiple base materials 130 together.

The welded product 100 according to an embodiment of the present disclosure relates to a welded product 100 manufactured by the welding method according to the above-described embodiment. Therefore, in the present embodiment, contents overlapping with those in the above-described embodiments will be omitted or briefly described, and differences will be mainly described.

More specifically, the welding pattern 160 forms a plurality of spiral patterns. Here, the welding line L of the plurality of spiral patterns 140, 150 does not overlap and is connected. At this time, the welding line L of the plurality of spiral patterns 140, 150 may not overlap and may be continuous. The plurality of spiral patterns may include the first spiral pattern 140 and the second spiral pattern 150.

The welding line L may have a start point where welding starts positioned at the center 141 of the first spiral pattern 140, and an end point where welding ends positioned at the center 151 of the second spiral pattern 150.

That is, the welding pattern 160 may form a welding line L starting at the center 141 of the first spiral pattern 140 and ending at the center 151 of the second spiral pattern 150.

The welding line L may include a first welding line La of the first spiral pattern 140, a second welding line Lb of the second spiral pattern 150, and a third welding line Lc connecting the first spiral pattern 140 and the second spiral pattern 150. Here, the first welding line La and the second welding line Lb may be formed in a curved line to form a spiral pattern, and the second welding line Lb may be formed in a straight line to be connected to the first welding line La and the second welding line Lb.

The width w1 of the overlapping part of multiple base materials 130 may be 8 to 15 mm.

Here, the multiple base materials 130 may include a first base material 110 and a second base material 120, and the width of the overlapping section of the first base material 110 and the second base material 120 may be, for example, 8 to 15 mm.

Meanwhile, the diameters of the plurality of spiral patterns 140, 150 may each be formed to be 1.5 to 3.0 π. That is, the first spiral pattern 140 and the second spiral pattern 150 may be welded to have diameters of 1.5 to 3.0 π, respectively. Accordingly, the first spiral pattern 140 and the second spiral pattern 150 are welded to have the diameters at a level of 1.5 to 3.0 π, respectively, so that there is an effect of acting as an effective welding pattern 160 from mechanical and material points of view within a narrow area. At this time, the diameters of the first spiral pattern 140 and the second spiral pattern 150 are formed to be equal to or greater than 1.5 π, which is the lower limit, so that there is an effect of preventing excessive heat input due to the overlapping of the heat input of the welding line L in a direction from the outside to the inside (out → in) of the spiral patterns 140, 150.

Meanwhile, the intervals d1, d2 between the welding lines L in the plurality of spiral patterns 140, 150 may be 0.2 to 0.4 mm. That is, the first spiral pattern 140 and the second spiral pattern 150 may be welded so that the intervals d1, d2 between the welding lines L are 0.2 to 0.4 mm. Accordingly, the intervals d1, d2 between the welding lines L in the first spiral pattern 140 and the second spiral pattern 150 are formed to be equal to or greater than 0.2 mm, which is the lower limit, and thus there is an effect of preventing the occurrence of a decrease in the strength of a welding portion due to excessive heat input when the intervals d1, d2 between the welding lines L are too narrow. Additionally, the intervals d1, d2 between the welding lines L in the first spiral pattern 140 and the second spiral pattern 150 are formed to be equal to or less than 0.4 mm, which is the upper limit, and thus there is an effect of preventing the formation of a welding portion with weak strength when the intervals d1, d2 between the welding lines L are too wide.

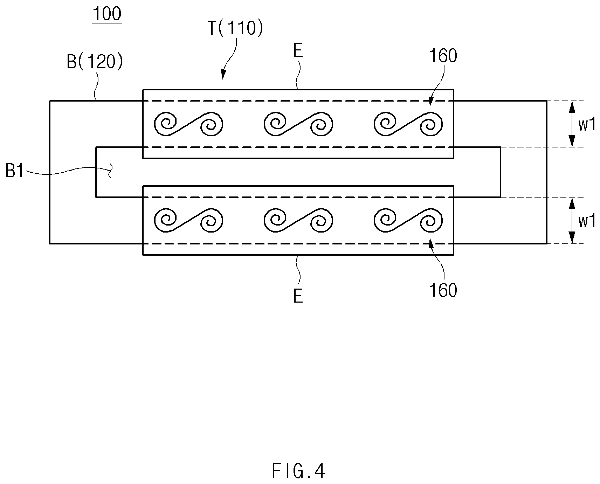

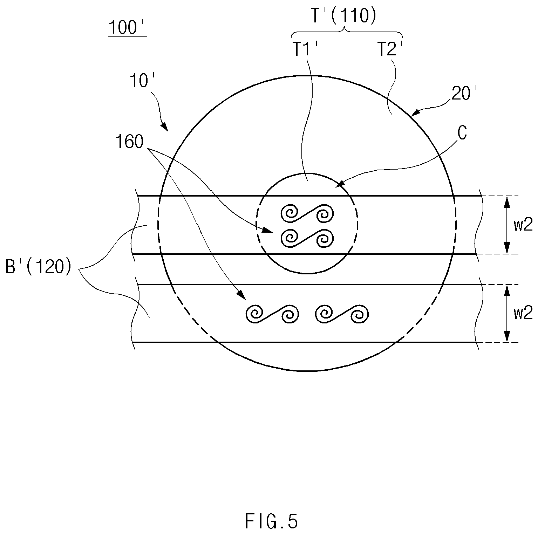

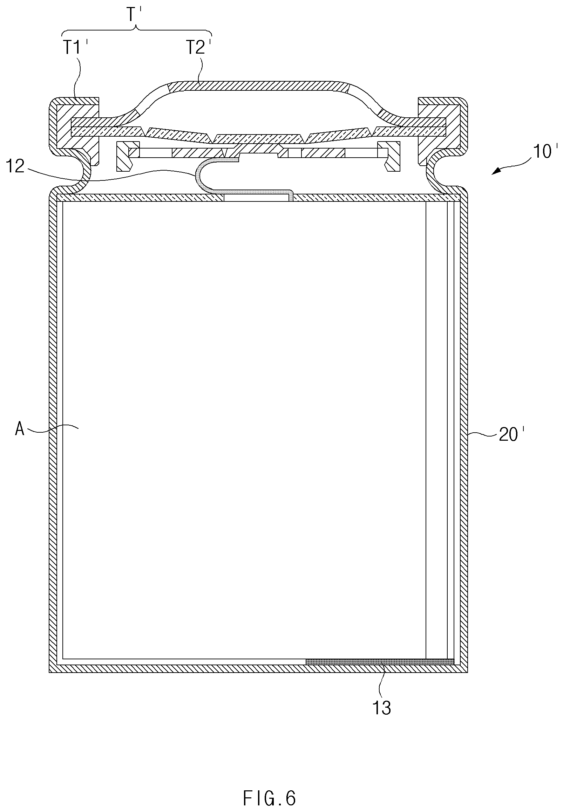

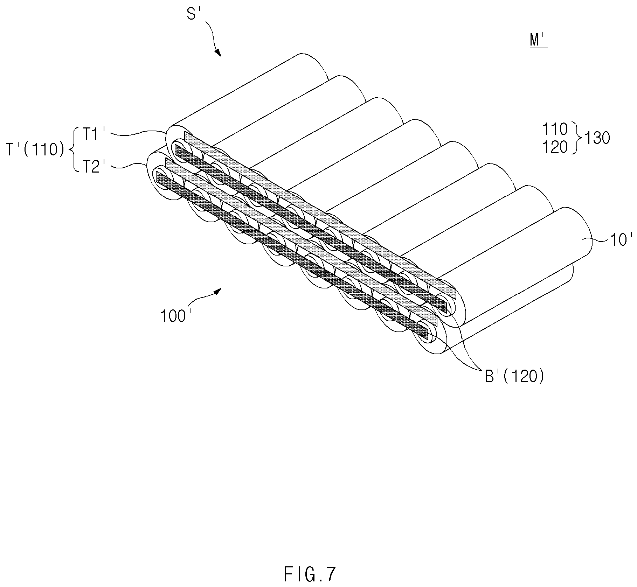

FIG. 4 is a plan view exemplarily showing a welded part of an example of a welded product welded by a welding method according to an embodiment of the present disclosure, FIG. 5 is an enlarged plan view showing a welded part of another example of a welded product welded by a welding method according to an embodiment of the present disclosure, FIG. 6 is a cross-sectional view showing a secondary battery applied to another example of a welded product welded by a welding method according to an embodiment of the present disclosure, and FIG. 7 is a perspective view showing another example of a welded product welded by a welding method according to an embodiment of the present disclosure.

Additionally, referring to FIGS. 3 to 7, multiple base materials 130 may be electrode terminals T, T' and busbars B, B' in a battery module including cell assemblies S, S' in which multiple secondary batteries 10, 10' having the electrode terminals are arranged, and the busbars B, B' connecting the electrode terminals T, T' of the multiple secondary batteries 10, 10'.

Meanwhile, as an example, referring to FIGS. 3 and 4, the secondary battery 10 may be provided as a pouch-type secondary battery 10 in which an electrode assembly is accommodated in a pouch 11. Here, the electrode terminal T may include an electrode lead E connected to the electrode assembly and extending to the outside of the pouch 11. At this time, the multiple base materials 130 may include the electrode lead E. And, for example, the width w1 of the overlapping part of the electrode lead E as the first base material and the busbar B as the second base material may be 8 to 15 mm. Here, specifically, for example, the width w1 of the overlapping part of the electrode lead E as the first base material and the busbar B as the second base material may be 8 to 15 mm. And, the busbar B may include various shapes, such as a straight part or a " 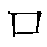 "-shaped part with a busbar hole B1 formed at the center.

Meanwhile, as another example, referring to FIGS. 5 to 7, the secondary battery 10' may be provided as a cylindrical secondary battery 10' in which an electrode assembly A is accommodated in a can 20'. The electrode terminal T' may include a positive electrode terminal T1' positioned at the center side of an outer end of the can 20' and a negative electrode terminal T2' positioned around the positive electrode terminal T1' at the outer end of the can 20'. Here, the multiple base materials 130 may include the positive electrode terminal T1' and the negative electrode terminal T2'. And, the width w2 of the overlapping part of the electrode terminal T' as the first base material and the busbar B' as the second base material may be 8 to 15 mm. At this time, the positive electrode terminal T1' may be connected to the positive electrode tab 12 extending from the positive electrode of the electrode assembly A, and the negative electrode terminal T2' may be connected to the negative electrode tab 13 extending from the negative electrode of the electrode assembly A.

### Battery module according to an embodiment

Meanwhile, referring to FIGS. 1, 3, 5, and 7, battery modules M, M' may be configured by including welded products 100, 100' according to an embodiment of the present disclosure configured as described above.

The welded products 100, 100' include multiple base materials 130 positioned in overlapping with each other and a predetermined welding pattern 160 formed by welding the multiple base materials 130 together, wherein the welding pattern 160 forms a plurality of spiral patterns 140, 150, and the welding line L of the plurality of spiral patterns 140, 150 does not overlap and is continuous.

Here, the multiple base materials 130 may be electrode terminals T, T' and busbars B, B' in battery modules M, M' including cell assemblies S, S' in which multiple secondary batteries 10, 10' having the electrode terminals T, T' are arranged, and the busbars B, B' connecting the electrode terminals T, T' of the multiple secondary batteries 10, 10'.

That is, the battery modules M, M' may include the cell assemblies S, S' in which the secondary batteries 10, 10' are arranged and welded products 100, 100', and the welded products 100, 100' may include the electrode terminals T, T' as the first bas material 110, the busbars B, B' as the second base material 120, and the welding pattern 160.

### < Manufacturing example >

The multiple base materials 130 were welded together to form the welding pattern 160 in a form in which the plurality of spiral patterns were connected, and a welded product was manufactured by welding continuously without overlapping the welding line when welding in the plurality of spiral patterns.

At this time, the diameter D2 of the spiral pattern was formed to be 2.3 pi (π).

Here, the multiple base materials 130 included a first base material 110 made of aluminum and a second base material 120 made of steel.

And, the welding pattern 160 was formed by laser welding. At this time, the laser power was 550 W, and the welding speed was 300 mm/s.

### < Comparative example >

A welded product was manufactured by welding the multiple base materials 130 together to form a plurality of spiral patterns as each separate welding pattern P without connecting the plurality of spiral patterns.

At this time, the diameter D1 of the spiral pattern was formed to be 3.0 pi (π). Here, the multiple base materials 130 were used as the same articles as in the manufacturing example. And, the welding pattern 160 was formed by laser welding as in the manufacturing example. At this time, the laser power was 600 W, and the welding speed was 300 mm/s.

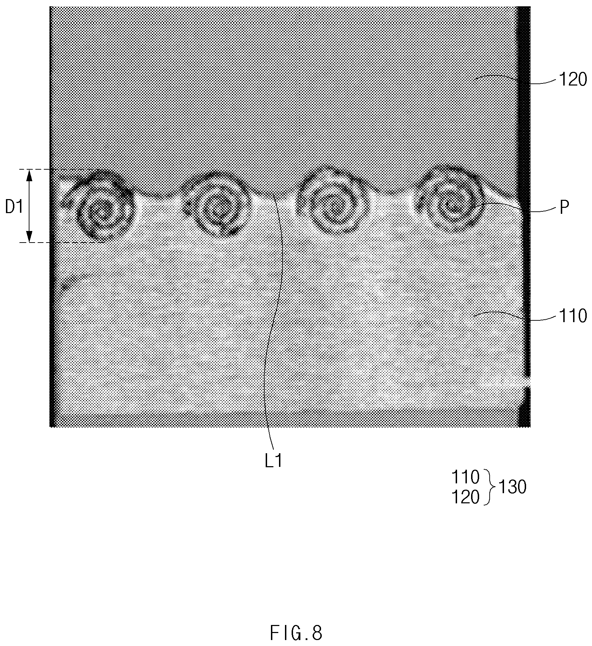

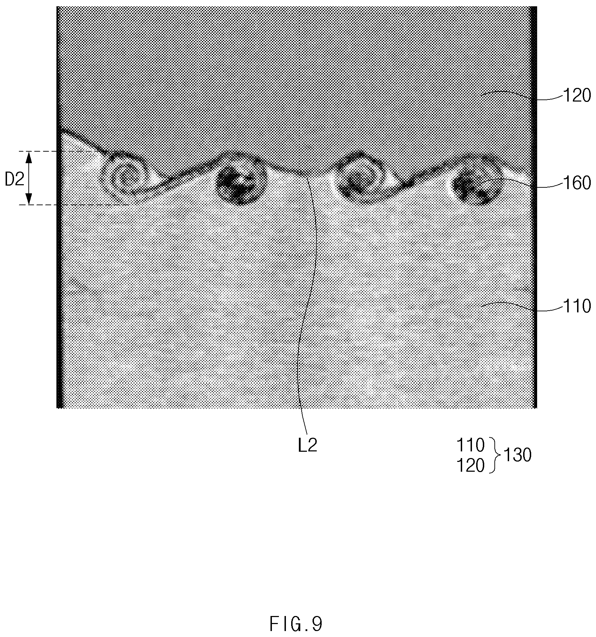

FIG. 8 is an external photograph showing a fractured state of a welded product welded by a welding method according to a comparative example, and FIG. 9 is an external photograph showing a fractured state of a welded product welded by a welding method according to a manufacturing example. Here, FIGS. 8 and 9 are photographs showing a state in which the second base material 120 is fractured due to a tensile load applied to the first base material 110. At this time, FIGS. 8 and 9 show a state in which the first base material 110 and the second base material 120 are fractured around the welding patterns P, 160, and are fractured with each other along the fracture lines L1, L2 formed along the outer lines of the welding patterns P, 160.

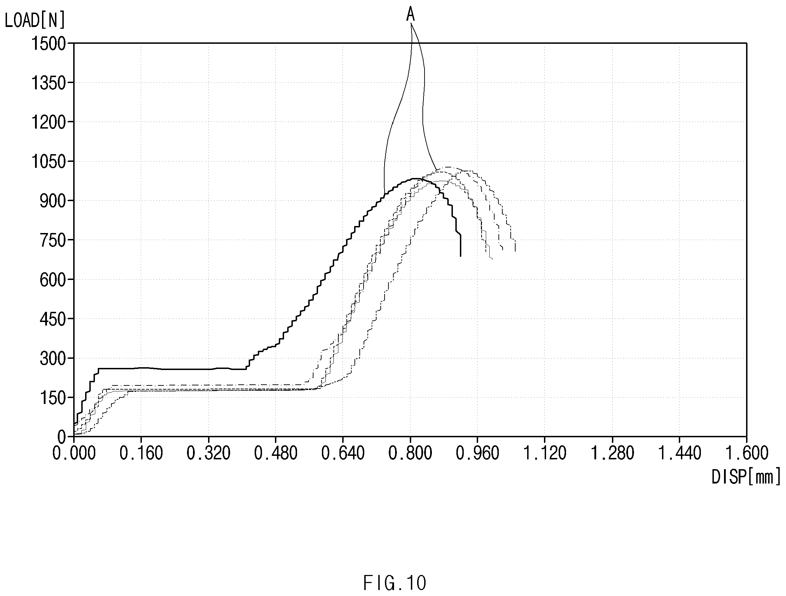

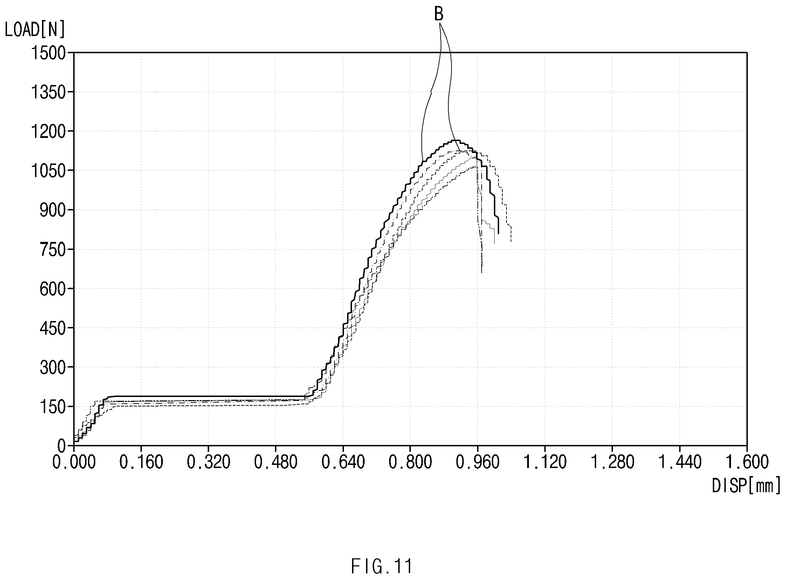

Additionally, FIG. 10 is a graph showing a tensile load of a welded product welded by a welding method according to a comparative example, and FIG. 11 is a graph showing a tensile load of a welded product welded by a welding method according to a manufacturing example.

### < Experimental example >

Welded products of the manufacturing example and the comparative example were each manufactured, and a tensile force was applied to fracture the welded product in which multiple base materials 130 were welded together to separate the multiple base materials 130. And, the maximum tensile load at the time of fracture was measured, and then the results of the manufacturing example are shown in the graph of FIG. 10, and the results of the comparative example are shown in the graph of FIG. 11.

And, the welded products of the manufacturing example and the comparative example were each manufactured, and the tensile load was applied to measure the tensile load at the time of fracture, and then the fractured base material 130 was welded again to measure the tensile load of the welded product, which was repeated several times and the results are shown in FIGS. 10 and 11.

Here in FIGS. 10 and 11, the unit of the vertical axis is LOAD [N], which represents a tensile force, and the unit of the horizontal axis is DISP [mm], which represents a displacement. FIG. 10 is a graph showing the maximum tensile load when the welded product A welded by the welding method according to the comparative example as shown in FIG. 8 fractures, and FIG. 11 is a graph showing the maximum tensile load when the welded product B welded by the welding method according to the manufacturing example as shown in FIG. 9 fractures.

It can be seen that the maximum tensile load of the welded product A of the comparative example is about 1000 N on average, as shown in FIG. 10, and the maximum tensile load of the welded product B of the manufacturing example is about 1033 N on average, as shown in FIG. 11.

Accordingly, it can be seen that the maximum tensile loads are similar when the welding pattern P of the comparative example is formed as each one spiral pattern having the diameter D1 of 3.0 pi (π) during welding, and when the welding pattern 160 of the manufacturing example is formed in a connected form of two spiral patterns having the diameter D2 of 2.3 pi (π) without overlapping.

Therefore, when two spiral patterns are formed without overlapping during welding as in the manufacturing example, the maximum tensile load is similar despite being smaller than the spiral pattern formed as each one of the comparative example, and thus it can be seen that the size of the welding pattern 160 may be reduced as in the manufacturing example under an appropriate maximum tensile load.

In the end, it can be seen that forming two spiral patterns without overlapping the welding pattern 160 as in the manufacturing example has the effect of securing mechanical properties capable of withstanding similar loads even when the size of the welding pattern 160 is reduced, compared to forming two welding patterns P with one spiral pattern as in the comparative example.

The present disclosure has been hereinabove described in detail through specific embodiments, but this is intended to specifically describe the present disclosure, and the present disclosure is not limited thereto. It will be said that various modifications and variations are possible by those having ordinary skill in the art within the technical ideas of the present disclosure.

Additionally, the specific scope of protection of the present disclosure will be made clear by the appended claims of the patent.

### [List of Reference Numerals]

10, 10': Secondary battery
11: Pouch
100, 100': Welded product
110: First base material
120: Second base material
130: Base material
140: First spiral pattern
141: Center
150: Second spiral pattern
151: Center
160: Welding pattern
B, B': Busbar
B1: Busbar hole
E: Electrode lead
S, S': Cell assembly
C: Center side
T, T': Electrode terminal
T1, T1': Negative electrode terminal
T2, T2': Positive electrode terminal
G: Pattern extension (length) direction
W: Pattern width direction
w1, w2: Width

## Claims

1. A welding method comprising:
a positioning process in which multiple base materials are positioned in overlapping with each other; and
a welding process in which the multiple base materials are welded together to form a predetermined welding pattern,
wherein the welding process welds the welding pattern in a form in which a plurality of spiral patterns are connected without overlapping.

2. The welding method according to claim 1,
wherein the welding process is performed so that a welding line does not overlap and is continuously connected when welding with the plurality of spiral patterns.

3. The welding method according to claim 2,
wherein the plurality of spiral patterns comprise a first spiral pattern and a second spiral pattern, and
the welding process starts welding at the center of the first spiral pattern and ends welding at the center of the second spiral pattern.

4. The welding method according to claim 3,
wherein the welding process is performed by irradiating laser light to the base material using a laser device.

5. The welding method according to claim 4,
wherein in the welding process,
the first spiral pattern is formed by irradiating the laser light in a counterclockwise direction, and
the second spiral pattern is formed by irradiating the laser light in a clockwise direction.

6. The welding method according to claim 1,
wherein in the positioning process, the multiple base materials are positioned to have the width of an overlapping part of 8 to 15 mm.

7. The welding method according to claim 1,
wherein the multiple base materials are electrode terminals and busbars in a battery module comprising a cell assembly in which multiple secondary batteries having the electrode terminals are arranged and the busbars connecting the electrode terminals of the multiple secondary batteries.

8. The welding method according to claim 1,
wherein the welding process is performed so that the diameters of the plurality of spiral patterns are each formed to be 1.5 to 3.0 π.

9. The welding method according to claim 2,
wherein the welding process is performed so that the interval between the welding lines in the plurality of spiral patterns is 0.2 to 0.4 mm.

10. The welding method according to claim 1,
wherein the welding process is performed by irradiating laser light having a wavelength of 1030 nm to 1070 nm to the base material using the laser device.

11. A welded product comprising:
multiple base materials positioned in overlapping with each other; and
a predetermined welding pattern formed by welding the multiple base materials together,
wherein the welding pattern forms a plurality of spiral patterns, and
the plurality of spiral patterns do not overlap and are connected.

12. The welded product according to claim 11,
wherein the welding line of the plurality of spiral patterns does not overlap and is continuously connected.

13. The welded product according to claim 12,
wherein the plurality of spiral patterns comprise a first spiral pattern and a second spiral pattern, and
the welding line has a start point where welding starts positioned at the center of the first spiral pattern, and an end point where welding ends positioned at the center of the second spiral pattern.

14. The welded product according to claim 11,
wherein the width of an overlapping part of the multiple base materials is 8 to 15 mm.

15. The welded product according to claim 11,
wherein the multiple base materials are electrode terminals and busbars in a battery module comprising a cell assembly in which multiple secondary batteries having the electrode terminals are arranged and the busbars connecting the electrode terminals of the multiple secondary batteries.

16. The welded product according to claim 15,
wherein the secondary battery is provided as a pouch-type secondary battery in which an electrode assembly is accommodated in a pouch,
the electrode terminal comprises an electrode lead connected to the electrode assembly and extending to the outside of the pouch, and
the multiple base materials comprise the electrode lead.

17. The welded product according to claim 15,
wherein the secondary battery is provided as a cylindrical secondary battery in which an electrode assembly is accommodated in a can,
the electrode terminal comprises a positive electrode terminal positioned at the center side of an outer end of the can and a negative electrode terminal positioned around the positive electrode terminal at the outer end of the can, and
the multiple base materials comprise the positive electrode terminal and the negative electrode terminal.

18. The welded product according to claim 11,
wherein the diameters of the plurality of spiral patterns are each 1.5 to 3.0 π.

19. The welded product according to claim 12,
wherein the interval between the welding lines in the plurality of spiral patterns is 0.2 to 0.4 mm.

20. A battery module comprising a welded product described in any one of claims 11 to 19.
